# EUROPEAN PATENT SPECIFICATION

(11) **EP 4 062 162 B1**
(45) Date of publication and mention of the grant of the patent: **09.04.2025**
(21) Application number: 20815892.3
(22) Date of filing: 16.11.2020
(51) Int. Cl.: G01N 27/04, B24B 37/04

(54) **POLISHING DEVICE COMPRISING A MOISTURE SENSOR AND METHOD FOR MEASURING THE MOISTURE IN A POLISHING PAD**
POLIERVORRICHTUNG ENTHALTEND EINEN FEUCHTIGKEITSSENSOR, UND VERFAHREN ZUM MESSEN DER FEUCHTIGKEIT IN EINEM POLIERKISSEN
DISPOSITIF DE POLISSAGE COMPRENANT UN CAPTEUR D'HUMIDITÉ, ET PROCÉDÉ DE MESURE DE L'HUMIDITÉ DANS UN TAMPON DE POLISSAGE

(30) Priority: 18.11.2019 FI 20195984
(43) Date of publication of application: 28.09.2022
(73) Proprietor: Turun yliopisto, 20014 Turun yliopisto (FI)
(72) Inventor: PELTOLA, Arto, 21420 LIETO (FI); PELTOLA, Tatu, 21420 LIETO (FI)
(74) Representative: Berggren Oy
(86) International application number: PCT/FI2020/050765
(87) International publication number: WO 2021/099682

(56) References cited:
- WO-A1-2009/013190
- CH-A5- 651 931
- DE-C- 662 033
- JP-A- S56 157 848
- US-A1- 2007 099 545

## Description

### TECHNICAL FIELD OF THE INVENTION

The present invention relates to a moisture sensor and a method for measuring the moisture in a polishing pad according to the preambles of the appended independent claims. The invention also relates to a polishing device incorporating a moisture sensor.

### BACKGROUND OF THE INVENTION

A polishing suspension is typically used in the polishing of a specimen to enhance the polishing result and to prevent overheating of a polishing pad. The amount of the polishing suspension in the polishing pad, i.e. the moisture content of the polishing pad, has a large effect on the polishing process. If the polishing pad is too wet, the friction between the specimen and the polishing pad can be so small that the specimen is hardly polished at all. If, on the other hand, the polishing pad is too dry, there is a risk that the specimen is seriously degraded due to the increased friction between the specimen and the polishing pad.

In view of the above, there exists a need to measure the moisture in a polishing pad. Various moisture sensors are known, but none of them is suitable for measuring the moisture in the polishing pad easily and accurately.

Documents JPS56157848A, WO2009/013190A1 and CH651931A5 describe examples of moisture sensors. Document DE662033C describes an arrangement for determining electrical properties of human skin. Document US2007/099545A1 describes a polishing tool for characterising the surface of a polishing pad.

### OBJECTIVES OF THE INVENTION

It is the main objective of the present invention to reduce or even eliminate the prior art problems presented above.

It is an objective of the invention to provide a polishing device in which the moisture of a polishing pad can be measured during the polishing process. It is a further objective of the invention to provide a method for measuring the moisture in a polishing pad easily and accurately.

In order to realise the above-mentioned objectives, the moisture sensor and the method according to the invention are characterised by what is presented in the characterising portions of the appended independent claims. Advantageous embodiments of the invention are described in the dependent claims.

### DESCRIPTION OF THE INVENTION

A moisture sensor of the polishing device according to the invention comprises a contact surface for contacting a polishing pad, and a first, a second and a third electrical contact element electrically isolated from each other, the electrical contact elements being disposed within the moisture sensor so that they are exposed at the contact surface. The moisture sensor according to the invention can be used to measure the moisture in a polishing pad that is used for polishing a specimen. For the measurement, the contact surface and the electrical contact elements therein are arranged in contact with the surface of the polishing pad. The measurement is based on measuring a physical quantity that varies as a function of the moisture in the polishing pad. Such a physical quantity is, for example, the capacitance between the first electrical contact element and a polishing platen to which the polishing pad is attached, i.e. the capacitance between the opposite sides of the polishing pad. Another such physical quantity is the (electrical) resistance between the second electrical contact element and the third electrical contact element when they are in contact with the surface of the polishing pad.

The contact surface is preferably planar so that the electrical contact elements can easily be arranged in contact with the surface of the polishing pad. Preferably, the contact surface is also circular, which ensures that the moisture sensor can slide smoothly on the surface of the polishing pad. The diameter of the planar and circular contact surface can be, for example, 10-50 mm or 15-25 mm. The dimensioning of the moisture sensor can depend, for example, on the diameter of the polishing pad, the material of the polishing pad, the structure of the polishing pad, the composition of the used polishing suspension, the features of the polished specimen, the needed measuring accuracy and/or the needed measuring range. If the surface of the polishing pad is rough or uneven, it can be beneficial to have a slightly convex contact surface.

The electrical contact elements, i.e. the electrodes, provide an electrical path through which electrical properties of the polishing pad can be measured. The electrical contact elements can have different shapes and sizes. The electrical contact elements are made of an electrically conductive material, which is preferably also wear and corrosion resistant. Preferable materials for the electrical contact elements are, for example, steel and gold-platinum alloy. The electrical contact elements are electrically isolated from each other to prevent short circuits.

The moisture sensor may comprise a housing, inside which the electrical contact elements are arranged. The housing can be made of a wear and corrosion resistant ceramic or metal, or other suitable material. The housing can be filled with an electrically insulating material, such as epoxy resin, or the electrical insulation can be made from a wear resistant ceramic, such as cubic boron nitride (CBN) or boron carbide (B₄C), which electrically isolate the electrical contact elements from each other. The housing can be a hollow cylinder, one end of which functions as the contact surface. The diameter of the hollow cylinder can be, for example, 10-50 mm or 15-25 mm, and the height of the hollow cylinder can be, for example, 10-20 mm, 5-10 mm or 1-5 mm.

The moisture sensor can be electrically connected to a measuring instrument with electrical connections such as wires, cables or carbon brushes. The measuring instrument can be configured to measure the capacitance between the first electrical contact element and a polishing platen to which the polishing pad is attached, and/or the resistance between the second electrical contact element and the third electrical contact element when they are in contact with the surface of the polishing pad. The values of the capacitance and the resistance depend on the moisture in the polishing pad. The wetter the polishing pad is, the larger the capacitance and the smaller the resistance are.

An advantage of the moisture sensor according to the invention is that the moisture in a polishing pad can be easily and accurately measured.

According to an embodiment of the invention the first electrical contact element is a cylinder, and the second electrical contact element and the third electrical contact element are hollow cylinders arranged concentrically around the first electrical contact element. The third electrical contact element is arranged around the second electrical contact element. The electrical contact elements are arranged inside the moisture sensor in such a manner that their axes are perpendicular to the plane of the contact surface. The first electrical contact element can be made by cutting a section from a round rod. The second and third electrical contact elements can be made by cutting sections from pipes having different diameters. The moisture sensor according to this embodiment can be made in such a manner that the electrical contact elements are embedded into an electrically insulating material, such as epoxy resin. The hardened material electrically isolates the electrical contact elements from each other, and it also functions as a supporting structure for the electrical contact elements. The moisture sensor may comprise a housing, such as a hollow cylinder, inside which the electrical contact elements are arranged. An advantage of the moisture sensor according to this embodiment is that it is cheap and easy to produce.

According to an embodiment of the invention the diameter of the first electrical contact element is less than 50 mm, and the wall thickness of the second electrical contact element and the third electrical contact element is less than 10 mm. The diameter of the first electrical contact element is preferably less than 35 mm and more preferably less than 20 mm. The wall thickness of the second electrical contact element and the third electrical contact element is preferably less than 5 mm and more preferably less than 2 mm. An advantage of using these measures is that the moisture sensor provides a good measurement sensitivity and accuracy. The height of the electrical contact elements can be, for example, 5-20 mm. The moisture sensor wears in use, and thus increasing the sensor height gives a longer working life.

According to an embodiment of the invention the gap between the wall of the first electrical contact element and the inner wall of the second electrical contact element is less than 10 mm, and the gap between the outer wall of the second electrical contact element and the inner wall of the third electrical contact element is less than 10 mm. The gap between the wall of the first electrical contact element and the inner wall of the second electrical contact element is preferably less than 5 mm and more preferably less than 2 mm. The gap between the outer wall of the second electrical contact element and the inner wall of the third electrical contact element is preferably less than 5 mm and more preferably less than 2 mm. An advantage of using these measures is that the moisture sensor provides a good measurement sensitivity.

According to an embodiment of the invention the first electrical contact element is a planar plate having an opening into which the second electrical contact element and the third electrical contact element are arranged. The planar plate is arranged inside the moisture sensor in such a manner that one side of the planar plate is exposed at the contact surface and the plane of the planar plate is parallel with the plane of the contact surface. The planar plate can be circular and have a diameter of 15-50 mm. The opening in the planar plate can be circular and have a diameter of 5-20 mm. The thickness of the planar plate can be 5-20 mm. In this embodiment, the second and third electrical contact elements can have different shapes and sizes provided that they fit inside the opening without touching the planar plate. The second and third electrical contact elements can be, for example, cylinders. The moisture sensor according to this embodiment can be made in such a manner that the electrical contact elements are embedded into an electrically insulating material, such as epoxy resin. The hardened material electrically isolates the electrical contact elements from each other, and it also functions as a supporting structure for the electrical contact elements. The moisture sensor may comprise a housing, such as a hollow cylinder, inside which the electrical contact elements are arranged. An advantage of the moisture sensor according to this embodiment is that it is mechanically strong, and cheap and easy to produce.

According to an embodiment of the invention the first electrical contact element, the second electrical contact element and the third electrical contact element are metal sheets wound on each other to form a roll, wherein each of the metal sheets is arranged between electrically insulating sheets. Preferably, the roll is impregnated with epoxy resin. The hardened epoxy resin electrically isolates the electrical contact elements from each other, and it also functions as a supporting structure for the electrical contact elements. The roll is arranged within the moisture sensor in such a manner that one end of the roll is exposed at the contact surface. The axis of the roll is perpendicular to the plane of the contact surface. The metal sheets can be made of, for example, aluminium, steel, copper or platinum-gold alloy. The electrically insulating sheets can be made of, for example, fiberglass, cloth or paper. An advantage of the moisture sensor according to this embodiment is that it is easy and cheap to produce.

According to an embodiment of the invention the thickness of the metal sheets is less than 1 mm, and the thickness of the electrically insulating sheets is less than 1 mm. Preferably, the thickness of the metal sheets is less than 0.1 mm, and the thickness of the electrically insulating sheets is less than 0.1 mm. An advantage of using these measures is that the moisture sensor provides a good measurement sensitivity.

According to an embodiment of the invention the moisture sensor comprises a fourth electrical contact element that is a hollow cylinder arranged concentrically around the roll, and a fifth electrical contact element that is a hollow cylinder arranged concentrically around the fourth electrical contact element, the fourth electrical contact element and the fifth electrical contact element being electrically isolated from one another. A measuring instrument can be used to measure the resistance between the fourth electrical contact element and the fifth electrical contact element when they are in contact with the surface of the polishing pad. The fourth and fifth electrical contact elements are arranged within the moisture sensor in such a manner that their axes are perpendicular to the plane of the contact surface. The fourth and fifth electrical contact elements can be made by cutting sections from pipes having different diameters. The fourth and fifth electrical contact elements can be embedded into an electrically insulating material, such as epoxy resin. The hardened material electrically isolates the fourth and fifth electrical contact elements from one another, and it also functions as a supporting structure. The wall thickness of the fourth electrical contact element and the fifth electrical contact element can be less than 10 mm, preferably less than 5 mm and more preferably less than 2 mm. The gap between the outer wall of the fourth electrical contact element and the inner wall of the fifth electrical contact element can be less than 10 mm, preferably less than 5 mm and more preferably less than 2 mm. An advantage of the moisture sensor according to this embodiment is that it is possible to measure the resistance and capacitance of the polishing pad simultaneously with different sets of electrical contact elements of different dimensions. This enables the user to choose the best moisture monitoring method for different combinations of the specimen, polishing pad and polishing suspension.

According to an embodiment of the invention the contact surface is planar. An advantage of the planar contact surface is that it enables to easily arrange the electrical contact elements in contact with the surface of the polishing pad.

The present invention also relates to a polishing device. The polishing device according to the invention comprises a polishing platen rotatable about an axis, a polishing pad attached to the polishing platen for polishing a specimen, a moisture sensor according to the invention, the contact surface of the moisture sensor being arranged in contact with the surface of the polishing pad, and means for measuring the capacitance between the first electrical contact element and the polishing platen and the resistance between the second electrical contact element and the third electrical contact element.

The polishing device according to the invention can be used to polish a specimen (i.e. an object) of a solid material, such as a piece of a natural (e.g. rock, mineral, ore or meteorite) or artificial (e.g. metal, concrete, ceramic, composite or semiconductor) material. The specimen to be polished can be held against the surface of the polishing pad with a specimen holder. The specimen holder can be configured to hold one or more specimens against the polishing pad. The specimen holder can comprise, for example, one or more inserts in which the specimens are secured by clamping. The specimen holder can be attached to a polishing head that presses the specimen with an adjustable pressing force against the polishing pad.

The polishing pad can be made of different materials, such as a fibrous cloth (e.g. real silk, polyester or acetate) or synthetic non-fibrous (e.g. neoprene, polyurethane or composite) material. The polishing pad is preferably disc-shaped, i.e. it has a flat circular shape. The polishing pad is preferably porous, enabling it to absorb a polishing suspension. The diameter of the polishing pad can be, for example, less than 500 mm, preferably 200-400 mm. The thickness of the polishing pad can be, for example, less than 5.0 mm, preferably 0.5-3.5 mm, and more preferably 1.0-3.0 mm.

The polishing pad is attached, preferably releasably, to the surface of the rotatable polishing platen. As the polishing platen is rotated, the polishing pad polishes the specimen that is arranged against its surface. The polishing platen can be made of a heat conductive and corrosion resistant material, such as aluminium, bronze or stainless steel, or of a plastic, polymer or composite material. The polishing platen may comprise an electrically insulated electrical contact element (for example a sheet made of austenitic stainless steel and having a thickness of about 0.5 mm) on its surface, to which an electrical contact element (for example a carbon brush) of a measuring instrument can be electrically connected. The polishing platen is preferably disc-shaped and heat conductive. The diameter of the polishing platen can be, for example, less than 500 mm, preferably 200-400 mm. Preferably, the diameters of the polishing platen and the polishing pad are essentially the same. The thickness of the polishing platen can be, for example, 20-50 mm. The optimal thickness of the polishing platen depends on the diameter and the material of the polishing platen.

The polishing device may comprise an actuator, such as an electric motor, for rotating the polishing platen. The actuator can be configured to rotate the polishing platen, for example, at a rotational speed of 0-600 rpm. To reduce possible interferences caused by the actuator, it may be beneficial to add an electrical insulation layer between the polishing platen and the actuator.

In addition to the polishing platen, also the specimen holder can be rotatable. The specimen holder can be rotatable about an axis, which is parallel to the rotation axis of the polishing platen. The polishing device may comprise an actuator, such as an electric motor, for rotating the specimen holder. The actuator can be configured to rotate the specimen holder, for example, at a rotational speed of 0-150 rpm.

In the polishing device according to the invention, the electrical contact elements of the moisture sensor are arranged in contact with the surface of the polishing pad. The moisture in the polishing pad is determined by measuring the capacitance between the first electrical contact element and the polishing platen or the resistance between the second electrical contact element and the third electrical contact element. The means for measuring the capacitance and the resistance may comprise a measuring instrument that is electrically connected with electrical connections, such as wires, cables or carbon brushes, to the electrical contact elements of the moisture sensor and to the polishing platen. The polishing platen may comprise an electrical contact element on its surface, to which electrical contact element the measuring instrument is electrically connected. The measuring instrument can measure the capacitance between the first electrical contact element and the polishing platen (i.e. the capacitance between the opposite sides of the polishing pad) and the resistance between the second electrical contact element and the third electrical contact element. The values of the capacitance and the resistance depend on the moisture in the polishing pad. The wetter the polishing pad is, the larger the capacitance and the smaller the resistance are.

An advantage of the polishing device according to the invention is that the moisture in a polishing pad can be easily and accurately measured during the polishing process.

According to an embodiment of the invention the polishing device comprises means for moving the moisture sensor between a plurality of positions on the polishing pad. The means for moving the moisture sensor is configured to move the moisture sensor along the surface of the polishing pad. The means for moving the moisture sensor may comprise an arm arranged above the polishing pad and an actuator for moving the moisture sensor along the arm. The arm is preferably straight, and its longitudinal axis is arranged parallel to the plane of the polishing pad. The arm is preferably arranged above the polishing pad in such a manner that it extends from the centre to the periphery of the polishing pad. This enables the moisture sensor to be moved to all possible positions on the polishing pad as the polishing platen is rotated. The actuator can be an electric motor. The means for moving the moisture sensor can be the specimen holder that is configured to hold the moisture sensor against the polishing pad. The specimen holder can comprise, for example, an insert in which the moisture sensor can move freely or is secured by clamping. The moisture sensor may comprise a wireless transmitter or transceiver for communicating with a remote device, such as a measuring instrument and/or a control unit that controls spray nozzle(s).

According to an embodiment of the invention the polishing device comprises means for dispensing a polishing suspension, based on a value of the measured capacitance or resistance, on the polishing pad. The polishing suspension enhances the polishing action and prevents overheating during the polishing process. The polishing suspension contains water and/or other suitable liquids, such as alcohols (e.g. ethanol, glycol or isopropyl alcohol) for moistening, cooling and lubricating the polishing pad. The polishing suspension may also contain abrasive particles, such as diamonds, aluminium oxide or colloidal silica for polishing of the surface of the specimen. Typically, the polishing suspension (i.e. slurry or fluid) is a mixture of liquid(s) and abrasive(s). The means for dispensing a polishing suspension may be configured, for example, to dispense the polishing suspension to a position on the polishing pad if in said position the value of the resistance is larger than a first threshold value, or if in said position the value of the capacitance is smaller than a second threshold value.

The means for dispensing a polishing suspension may comprise a spray nozzle arranged above the polishing pad and means for moving the spray nozzle between the plurality of positions on the polishing pad. The means for moving the spray nozzle may comprise an arm arranged above the polishing pad and an actuator for moving the spray nozzle along the arm. The arm is preferably straight, and its longitudinal axis is arranged parallel to the plane of the polishing pad. The arm is preferably arranged above the polishing pad in such a manner that it extends from the centre to the periphery of the polishing pad. This enables the spray nozzle to be moved to all possible positions on the polishing pad as the polishing platen is rotated. The actuator can be an electric motor. The means for moving the spray nozzle can be the specimen holder to which the spray nozzle is attached.

The means for dispensing a polishing suspension may comprise a container for the polishing suspension. The container can be connected by a flexible hose to the spray nozzle.

The means for dispensing a polishing suspension may comprise a control unit for controlling the spray nozzle and the actuator. The control unit may comprise a processor and a memory including computer program code, the memory and the computer program code being configured to, with the processor, cause the spray nozzle to dispense suitable amounts of the polishing suspension to the plurality of positions on the polishing pad. The amount of the polishing suspension to be dispensed to each position can be determined based on the values of the measured capacitance or resistance. The values of the measured capacitance or resistance can be compared to a predefined reference value or profile in order to determine the amount of the polishing suspension to be dispensed. The predefined reference value or profile corresponds to the desired moisture level in the polishing pad. The amount of the polishing suspension to be dispensed to each position on the polishing pad can be, for example, less than 5 µl / cm², less than 2 µl / cm² or 0.5-2 µl / cm².

According to an embodiment of the invention the polishing device comprises a compression element for pressing the moisture sensor against the surface of the polishing pad. The compression element enables to keep the sensor in contact with the surface of the polishing pad with a suitable pressing force. The pressing force of the compression element can be adjustable. The compression element can be, for example, a spring. The compression element can utilize air pressure, gravity, or magnetic or electromagnetic force in producing the suitable pressing force.

According to an embodiment of the invention the polishing device comprises means for cooling the polishing platen. The polishing platen can be cooled by spraying water onto the bottom side of the polishing platen. The polishing device may comprise a splash guard to prevent the mist of cooling water escaping onto the polishing pad. The splash guard can be made of, for example, plastic.

According to an embodiment of the invention the polishing device comprises means for evaporating the polishing suspension from the polishing pad. The polishing suspension can be evaporated with a stream of compressed air to a desired position on the polishing pad.

The present invention also relates to a method for measuring the moisture in a polishing pad that is attached to a polishing platen. The method according to the invention comprises arranging the contact surface of a moisture sensor according to the invention in contact with the surface of the polishing pad, and measuring the capacitance between the first electrical contact element and the polishing platen and/or the resistance between the second electrical contact element and the third electrical contact element.

An advantage of the method according to the invention is that the moisture in a polishing pad can be easily and accurately measured.

The exemplary embodiments of the invention presented in this text are not interpreted to pose limitations to the applicability of the appended claims. The verb "to comprise" is used in this text as an open limitation that does not exclude the existence of also unrecited features. The features recited in the dependent claims are mutually freely combinable unless otherwise explicitly stated.

The exemplary embodiments presented in this text and their advantages relate by applicable parts to the moisture sensor, the polishing device as well as the method according to the invention, even though this is not always separately mentioned.

### BRIEF DESCRIPTION OF THE DRAWINGS

- Fig. 1: illustrates a moisture sensor according to a first embodiment of the invention,
- fig. 2: illustrates a moisture sensor according to a second embodiment of the invention,
- fig. 3: illustrates a moisture sensor according to a third embodiment of the invention,
- fig. 4: illustrates a moisture sensor according to a fourth embodiment of the invention, and
- fig. 5: illustrates a polishing device according to an embodiment of the invention.

### DETAILED DESCRIPTION OF THE DRAWINGS

The same reference signs are used of the same or like components in different embodiments.

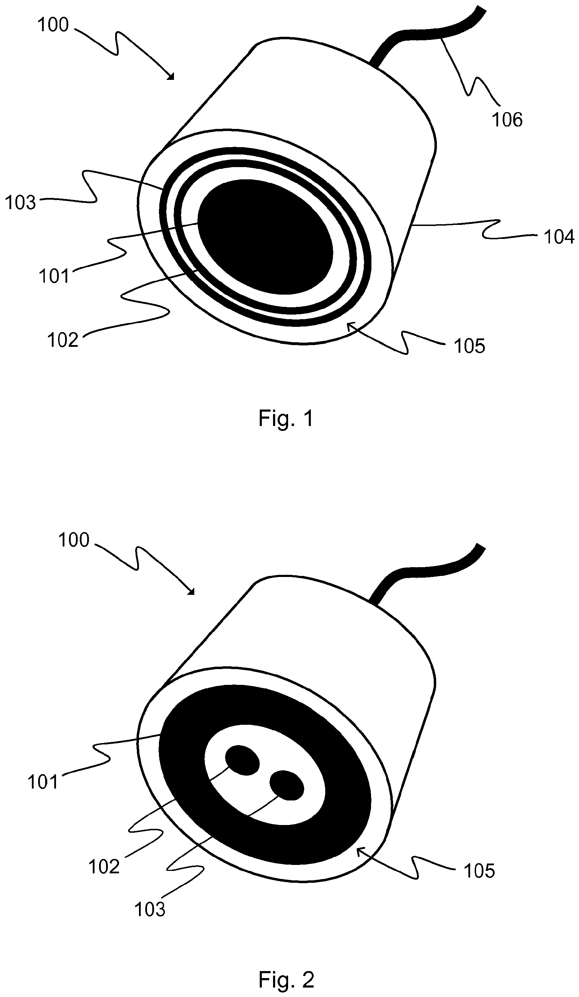

Fig. 1 illustrates a moisture sensor according to a first embodiment of the invention for measuring the moisture in a polishing pad (not shown in fig. 1). The moisture sensor 100 comprises electrical contact elements 101, 102 and 103, which are arranged inside a cylindrical housing 104 in such a manner that they are exposed at the contact surface 105 of the moisture sensor 100. The electrical contact elements 101, 102 and 103 are electrically isolated from each other and they provide an electrical path through which electrical properties of the polishing pad can be measured. For the measurement, the contact surface 105 and the electrical contact elements 101, 102 and 103 therein are arranged in contact with the surface of the polishing pad. The measurement is based on measuring a physical quantity that varies as a function of the moisture in the polishing pad.

The moisture sensor 100 comprises a multiwire cable 106 for electrically connecting the electrical contact elements 101, 102 and 103 to a measuring instrument (not shown in fig. 1). The measuring instrument can be configured to measure the capacitance between the electrical contact element 101 and a polishing platen (not shown in fig. 1) to which the polishing pad is attached, and/or the resistance between the electrical contact elements 102 and 103 when they are in contact with the surface of the polishing pad.

In fig. 1, the electrical contact element 101 is a cylinder, and the electrical contact elements 102 and 103 are hollow cylinders. The electrical contact elements 102 and 103 are arranged concentrically around the electrical contact element 101. The electrical contact elements 101, 102 and 103 are arranged inside the moisture sensor 100 in such a manner that their axes are perpendicular to the plane of the contact surface 105.

Fig. 2 illustrates a moisture sensor according to a second embodiment of the invention for measuring the moisture in a polishing pad (not shown in fig. 2). The moisture sensor of fig. 2 differs from the moisture sensor of fig. 1 in that the electrical contact elements 101, 102 and 103 are different. In fig. 2, the electrical contact element 101 is a circular planar plate, which has a circular opening into which the electrical contact elements 102 and 103 are arranged. The electrical contact element 101 is arranged inside the moisture sensor 100 in such a manner that one side of the circular planar plate is exposed at the contact surface 105 and the plane of the circular planar plate is parallel with the plane of the contact surface 105. The electrical contact elements 102 and 103 are cylinders.

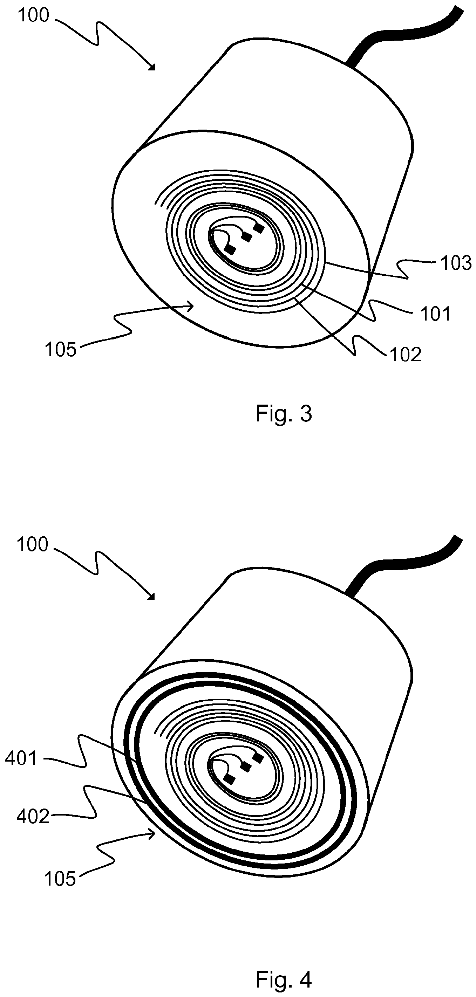

Fig. 3 illustrates a moisture sensor according to a third embodiment of the invention for measuring the moisture in a polishing pad (not shown in fig. 3). The moisture sensor of fig. 3 differs from the moisture sensor of fig. 1 in that the electrical contact elements 101, 102 and 103 are different. In fig. 3, the electrical contact elements 101, 102 and 103 are metal sheets wound on each other to form a roll, wherein each of the metal sheets is arranged between electrically insulating sheets (not shown in fig. 3). The roll is arranged within the moisture sensor 100 in such a manner that one end of the roll is exposed at the contact surface 105. The axis of the roll is perpendicular to the plane of the contact surface 105.

Fig. 4 illustrates a moisture sensor according to a fourth embodiment of the invention for measuring the moisture in a polishing pad (not shown in fig. 4). The moisture sensor of fig. 4 differs from the moisture sensor of fig. 3 in that moisture sensor 100 further comprises two additional electrical contact elements 401 and 402. The electrical contact element 401 is a hollow cylinder that is arranged concentrically around the roll. The electrical contact element 402 is a hollow cylinder that is arranged concentrically around the electrical contact element 401. The electrical contact elements 401 and 402 are electrically isolated from one another. A measuring instrument (not shown in fig. 4) can be configured to measure the resistance between the electrical contact elements 401 and 402 when they are in contact with the surface of the polishing pad. The electrical contact elements 401 and 402 are arranged within the moisture sensor 100 in such a manner that their axes are perpendicular to the plane of the contact surface 105.

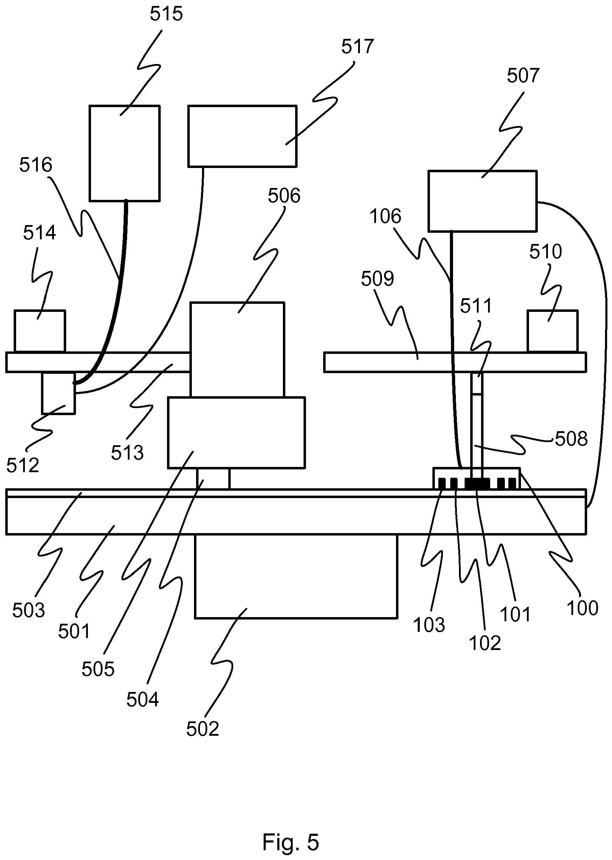

Fig. 5 illustrates a polishing device according to an embodiment of the invention. The polishing device comprises a polishing platen 501 that can be rotated about an axis with an actuator 502. A polishing pad 503 is attached to the polishing platen 501. The polishing pad 503 is used for polishing a specimen 504 that is held against the polishing pad 503 with a specimen holder 505. The specimen holder 505 can be rotated about an axis, which is parallel to the rotation axis of the polishing platen 501, with an actuator 506. As the polishing platen 501 and the specimen holder 505 are rotated, the polishing pad 503 polishes the specimen 504.

The polishing device comprises a moisture sensor according to fig. 1 for detecting the moisture in the polishing pad 503. The moisture sensor 100 comprises electrical contact elements 101, 102 and 103, which are arranged in contact with the surface of the polishing pad 503. The electrical contact elements 101, 102 and 103 are electrically connected to a measuring instrument 507 through a multiwire cable 106. The measuring instrument 507 can measure the resistance between the electrical contact elements 102 and 103, and the capacitance between the electrical contact element 101 and the polishing platen 501, i.e. between the opposite sides of the polishing pad 503. The resistance between the electrical contact elements 102 and 103, and the capacitance between the electrical contact element 101 and the polishing platen 501 are indicative of the moisture in a measurement position on the polishing pad 503.

The moisture sensor 100 is attached with a rod 508 to an arm 509 that is located above the polishing pad 503. The arm 509 extends from the centre to the periphery of the polishing pad 503. The moisture sensor 100 can be moved with an actuator 510 along the arm 509, thus enabling to move the moisture sensor 100 between different positions on the polishing pad 503. The rod 508 is provided with a spring 511 for pressing the moisture sensor 100 against the surface of the polishing pad 503. The spring 511 enables to keep the electrical contact elements 101, 102 and 103 in contact with the surface of the polishing pad 503 with a suitable pressing force.

The polishing device comprises a spray nozzle 512 for dispensing a polishing suspension on the polishing pad 503. The spray nozzle 512 is attached to an arm 513 that is located above the polishing pad 503. The arm 513 extends from the centre to the periphery of the polishing pad 503. The spray nozzle 512 can be moved with an actuator 514 along the arm 513, thus enabling to move the spray nozzle 512 between different positions above the polishing pad 503.

The polishing suspension is stored in a container 515 from which it is conveyed through a flexible hose 516 to the spray nozzle 512 to be dispensed on the polishing pad 503. The polishing device comprises a control unit 517 for controlling the dispensing of the polishing suspension. The control unit 517 controls the spray nozzle 512 to dispense suitable amounts of the polishing suspension to desired positions on the polishing pad 503. The amount of the polishing suspension to be dispensed to each position is determined based on the determined moisture or the friction on each position.

Only advantageous exemplary embodiments of the invention are described in the figures. It is clear to a person skilled in the art that the invention is not restricted only to the examples presented above, but the invention may vary within the limits of the claims presented hereafter. Some possible embodiments of the invention are described in the dependent claims, and they are not to be considered to restrict the scope of protection of the invention as such.

## Claims

1. A polishing device, comprising:
- a polishing platen (501) rotatable about an axis, and
- a polishing pad (503) attached to the polishing platen (501) for polishing a specimen (504),
**characterised in that** the polishing device comprises:
- a moisture sensor (100) comprising a contact surface (105) for contacting the polishing pad (503), and a first, a second and a third electrical contact element (101, 102, 103) electrically isolated from each other, the electrical contact elements (101, 102, 103) being disposed within the moisture sensor (100) so that they are exposed at the contact surface (105), wherein the contact surface (105) of the moisture sensor (100) is arranged in contact with the surface of the polishing pad (503), and
- means (106, 507) for measuring the capacitance between the first electrical contact element (101) and the polishing platen (501) and the resistance between the second electrical contact element (102) and the third electrical contact element (103).

2. The polishing device according to claim 1, **characterised in that** the first electrical contact element (101) is a cylinder, and the second electrical contact element (102) and the third electrical contact element (103) are hollow cylinders arranged concentrically around the first electrical contact element (101).

3. The polishing device according to claim 2, **characterised in that** the diameter of the first electrical contact element (101) is less than 50 mm, and the wall thickness of the second electrical contact element (102) and the third electrical contact element (103) is less than 10 mm.

4. The polishing device according to claim 2 or 3, **characterised in that** the gap between the wall of the first electrical contact element (101) and the inner wall of the second electrical contact element (102) is less than 10 mm, and the gap between the outer wall of the second electrical contact element (102) and the inner wall of the third electrical contact element (103) is less than 10 mm.

5. The polishing device according to claim 1, **characterised in that** the first electrical contact element (101) is a planar plate having an opening into which the second electrical contact element (102) and the third electrical contact element (103) are arranged.

6. The polishing device according to claim 1, **characterised in that** the first electrical contact element (101), the second electrical contact element (102) and the third electrical contact element (103) are metal sheets wound on each other to form a roll, wherein each of the metal sheets is arranged between electrically insulating sheets.

7. The polishing device according to claim 6, **characterised in that** the thickness of the metal sheets is less than 1 mm, and the thickness of the electrically insulating sheets is less than 1 mm.

8. The polishing device according to claim 6 or 7, **characterised in that** the moisture sensor (100) comprises a fourth electrical contact element (401) that is a hollow cylinder arranged concentrically around the roll, and a fifth electrical contact element (402) that is a hollow cylinder arranged concentrically around the fourth electrical contact element (401), the fourth electrical contact element (401) and the fifth electrical contact element (402) being electrically isolated from one another.

9. The polishing device according to any of claims 1 to 8, **characterised in that** the contact surface (105) is planar.

10. The polishing device according to any of claims 1 to 9, **characterised in that** the polishing device comprises means (508, 509, 510) for moving the moisture sensor (100) between a plurality of positions on the polishing pad (503).

11. The polishing device according to any of claims 1 to 10, **characterised in that** the polishing device comprises means (512, 515, 516, 517) for dispensing a polishing suspension, based on a value of the measured capacitance or resistance, on the polishing pad (503).

12. The polishing device according to any of claims 1 to 11, **characterised in that** the polishing device comprises a compression element (511) for pressing the moisture sensor (100) against the surface of the polishing pad (503).

13. A method for measuring the moisture in a polishing pad (503) that is attached to a polishing platen (501), **characterised in that** the method comprises:
- arranging a contact surface (105) of a moisture sensor (100) in contact with the surface of the polishing pad (503), which moisture sensor (100) comprises a first, a second and a third electrical contact element (101, 102, 103) electrically isolated from each other, the electrical contact elements (101, 102, 103) being disposed within the moisture sensor (100) so that they are exposed at the contact surface (105), and
- measuring the capacitance between the first electrical contact element (101) and the polishing platen (501) and/or the resistance between the second electrical contact element (102) and the third electrical contact element (103).

## Patentansprüche

1. Poliervorrichtung, umfassend:
- eine Polierplatte (501), die um eine Achse drehbar ist, und
- ein Polierkissen (503), das an der Polierplatte (501) angebracht ist, um eine Probe (504) zu polieren,
**dadurch gekennzeichnet, dass** die Poliervorrichtung Folgendes umfasst:
- einen Feuchtigkeitssensor (100), der eine Kontaktfläche (105) zum Kontaktieren des Polierkissens (503) und ein erstes, ein zweites und ein drittes elektrisches Kontaktelement (101, 102, 103) umfasst, die elektrisch voneinander isoliert sind, wobei die elektrischen Kontaktelemente (101, 102, 103) innerhalb des Feuchtigkeitssensors (100) angeordnet sind, so dass sie an der Kontaktfläche (105) freiliegen, wobei die Kontaktfläche (105) des Feuchtigkeitssensors (100) in Kontakt mit der Oberfläche des Polierkissens (503) angeordnet ist, und
- Mittel (106, 507) zum Messen der Kapazität zwischen dem ersten elektrischen Kontaktelement (101) und der Polierplatte (501) und dem Widerstand zwischen dem zweiten elektrischen Kontaktelement (102) und dem dritten elektrischen Kontaktelement (103).

2. Poliervorrichtung nach Anspruch 1, **dadurch gekennzeichnet, dass** das erste elektrische Kontaktelement (101) ein Zylinder ist und das zweite elektrische Kontaktelement (102) und das dritte elektrische Kontaktelement (103) konzentrisch um das erste elektrische Kontaktelement (101) angeordnete Hohlzylinder sind.

3. Poliervorrichtung nach Anspruch 2, **dadurch gekennzeichnet, dass** der Durchmesser des ersten elektrischen Kontaktelements (101) weniger als 50 mm beträgt und die Wandstärke des zweiten elektrischen Kontaktelements (102) und des dritten elektrischen Kontaktelements (103) weniger als 10 mm beträgt.

4. Poliervorrichtung nach Anspruch 2 oder 3, **dadurch gekennzeichnet, dass** der Spalt zwischen der Wand des ersten elektrischen Kontaktelements (101) und der Innenwand des zweiten elektrischen Kontaktelements (102) kleiner als 10 mm ist und der Spalt zwischen der Außenwand des zweiten elektrischen Kontaktelements (102) und der Innenwand des dritten elektrischen Kontaktelements (103) kleiner als 10 mm ist.

5. Poliervorrichtung nach Anspruch 1, **dadurch gekennzeichnet, dass** das erste elektrische Kontaktelement (101) eine ebene Platte mit einer Öffnung ist, in der das zweite elektrische Kontaktelement (102) und das dritte elektrische Kontaktelement (103) angeordnet sind.

6. Poliervorrichtung nach Anspruch 1, **dadurch gekennzeichnet, dass** das erste elektrische Kontaktelement (101), das zweite elektrische Kontaktelement (102) und das dritte elektrische Kontaktelement (103) zu einer Rolle aufeinander gewickelte Metallbleche sind, wobei die Metallbleche jeweils zwischen elektrisch isolierenden Blechen angeordnet sind.

7. Poliervorrichtung nach Anspruch 6, **dadurch gekennzeichnet, dass** die Dicke der Metallbleche weniger als 1 mm beträgt und die Dicke der elektrisch isolierenden Bleche weniger als 1 mm beträgt.

8. Poliervorrichtung nach Anspruch 6 oder 7, **dadurch gekennzeichnet, dass** der Feuchtigkeitssensor (100) ein viertes elektrisches Kontaktelement (401), das ein konzentrisch um die Walze angeordneter Hohlzylinder ist, und ein fünftes elektrisches Kontaktelement (402), das ein konzentrisch um das vierte elektrische Kontaktelement (401) angeordneter Hohlzylinder ist, umfasst, wobei das vierte elektrische Kontaktelement (401) und das fünfte elektrische Kontaktelement (402) elektrisch voneinander isoliert sind.

9. Poliervorrichtung nach einem der Ansprüche 1 bis 8, **dadurch gekennzeichnet, dass** die Kontaktfläche (105) eben ist.

10. Poliervorrichtung nach einem der Ansprüche 1 bis 9, **dadurch gekennzeichnet, dass** die Poliervorrichtung Mittel (508, 509, 510) zum Bewegen des Feuchtigkeitssensors (100) zwischen mehreren Positionen auf dem Polierkissen (503) umfasst.

11. Poliervorrichtung nach einem der Ansprüche 1 bis 10, **dadurch gekennzeichnet, dass** die Poliervorrichtung Mittel (512, 515, 516, 517) zum Aufbringen einer Poliersuspension auf das Polierkissen (503) basierend auf einem Wert der gemessenen Kapazität oder des gemessenen Widerstands umfasst.

12. Poliervorrichtung nach einem der Ansprüche 1 bis 11, **dadurch gekennzeichnet, dass** die Poliervorrichtung ein Kompressionselement (511) zum Andrücken des Feuchtigkeitssensors (100) gegen die Oberfläche des Polierkissens (503) umfasst.

13. Verfahren zum Messen der Feuchtigkeit in einem Polierkissen (503), das an einer Polierplatte (501) angebracht ist, **dadurch gekennzeichnet, dass** das Verfahren Folgendes umfasst:
- Anordnen einer Kontaktfläche (105) eines Feuchtigkeitssensors (100) in Kontakt mit der Oberfläche des Polierkissens (503), wobei der Feuchtigkeitssensor (100) ein erstes, ein zweites und ein drittes elektrisches Kontaktelement (101, 102, 103) umfasst, die elektrisch voneinander isoliert sind, wobei die elektrischen Kontaktelemente (101, 102, 103) innerhalb des Feuchtigkeitssensors (100) angeordnet sind, so dass sie an der Kontaktfläche (105) freiliegen, und
- Messen der Kapazität zwischen dem ersten elektrischen Kontaktelement (101) und der Polierplatte (501) und/oder des Widerstands zwischen dem zweiten elektrischen Kontaktelement (102) und dem dritten elektrischen Kontaktelement (103).

## Revendications

1. Dispositif de polissage, comprenant :
- une platine de polissage (501) rotative autour d'un axe, et
- un tampon de polissage (503) fixé à la platine de polissage (501) pour polir un échantillon (504),
**caractérisé en ce que** le dispositif de polissage comprend :
- un capteur d'humidité (100) comprenant une surface de contact (105) destinée à entrer en contact avec le tampon de polissage (503), et un premier, un deuxième et un troisième élément de contact électrique (101, 102, 103) isolés électriquement les uns des autres, les éléments de contact électrique (101, 102, 103) étant disposés à l'intérieur du capteur d'humidité (100) de sorte qu'ils sont exposés au niveau de la surface de contact (105), dans lequel la surface de contact (105) du capteur d'humidité (100) est agencée en contact avec la surface du tampon de polissage (503), et
- des moyens (106, 507) permettant de mesurer la capacité entre le premier élément de contact électrique (101) et la platine de polissage (501) et la résistance entre le deuxième élément de contact électrique (102) et le troisième élément de contact électrique (103).

2. Dispositif de polissage selon la revendication 1, **caractérisé en ce que** le premier élément de contact électrique (101) est un cylindre, et le deuxième élément de contact électrique (102) et le troisième élément de contact électrique (103) sont des cylindres creux agencés concentriquement autour du premier élément de contact électrique (101).

3. Dispositif de polissage selon la revendication 2, **caractérisé en ce que** le diamètre du premier élément de contact électrique (101) est inférieur à 50 mm, et l'épaisseur de paroi du deuxième élément de contact électrique (102) et du troisième élément de contact électrique (103) est inférieure à 10 mm.

4. Dispositif de polissage selon la revendication 2 ou 3, **caractérisé en ce que** l'espace entre la paroi du premier élément de contact électrique (101) et la paroi interne du deuxième élément de contact électrique (102) est inférieur à 10 mm, et l'espace entre la paroi externe du deuxième élément de contact électrique (102) et la paroi interne du troisième élément de contact électrique (103) est inférieur à 10 mm.

5. Dispositif de polissage selon la revendication 1, **caractérisé en ce que** le premier élément de contact électrique (101) est une plaque plane ayant une ouverture dans laquelle sont agencés le deuxième élément de contact électrique (102) et le troisième élément de contact électrique (103).

6. Dispositif de polissage selon la revendication 1, **caractérisé en ce que** le premier élément de contact électrique (101), le deuxième élément de contact électrique (102) et le troisième élément de contact électrique (103) sont des feuilles métalliques enroulées les unes sur les autres pour former un rouleau, dans lequel chacune des feuilles métalliques est agencée entre des feuilles électriquement isolantes.

7. Dispositif de polissage selon la revendication 6, **caractérisé en ce que** l'épaisseur des feuilles métalliques est inférieure à 1 mm, et l'épaisseur des feuilles électriquement isolantes est inférieure à 1 mm.

8. Dispositif de polissage selon la revendication 6 ou 7, **caractérisé en ce que** le capteur d'humidité (100) comprend un quatrième élément de contact électrique (401) qui est un cylindre creux agencé concentriquement autour du rouleau, et un cinquième élément de contact électrique (402) qui est un cylindre creux agencé concentriquement autour du quatrième élément de contact électrique (401), le quatrième élément de contact électrique (401) et le cinquième élément de contact électrique (402) étant isolés électriquement l'un de l'autre.

9. Dispositif de polissage selon l'une quelconque des revendications 1 à 8, **caractérisé en ce que** la surface de contact (105) est plane.

10. Dispositif de polissage selon l'une quelconque des revendications 1 à 9, **caractérisé en ce que** le dispositif de polissage comprend des moyens (508, 509, 510) pour déplacer le capteur d'humidité (100) entre une pluralité de positions sur le tampon de polissage (503).

11. Dispositif de polissage selon l'une quelconque des revendications 1 à 10, **caractérisé en ce que** le dispositif de polissage comprend des moyens (512, 515, 516, 517) pour distribuer une suspension de polissage, sur la base d'une valeur de la capacité ou de la résistance mesurée, sur le tampon de polissage (503).

12. Dispositif de polissage selon l'une quelconque des revendications 1 à 11, **caractérisé en ce que** le dispositif de polissage comprend un élément de compression (511) pour presser le capteur d'humidité (100) contre la surface du tampon de polissage (503).

13. Procédé de mesure de l'humidité dans un tampon de polissage (503) qui est fixé à une platine de polissage (501), **caractérisé en ce que** le procédé comprend :
- l'agencement d'une surface de contact (105) d'un capteur d'humidité (100) en contact avec la surface du tampon de polissage (503), lequel capteur d'humidité (100) comprend un premier, un deuxième et un troisième élément de contact électrique (101, 102, 103) isolés électriquement les uns des autres, les éléments de contact électrique (101, 102, 103) étant disposés à l'intérieur du capteur d'humidité (100) de sorte qu'ils sont exposés au niveau de la surface de contact (105), et
- la mesure de la capacité entre le premier élément de contact électrique (101) et la platine de polissage (501) et/ou la résistance entre le deuxième élément de contact électrique (102) et le troisième élément de contact électrique (103).
